# EUROPEAN PATENT SPECIFICATION

(11) **EP 2 454 743 B1**
(45) Date of publication and mention of the grant of the patent: **28.08.2013**
(21) Application number: 10731503.8
(22) Date of filing: 01.07.2010
(51) Int. Cl.: H01F 7/20, B66C 1/06

(54) **ELECTROMAGNET FOR MOVING TUBULAR MEMBERS**
ELEKTROMAGNET ZUM BEWEGEN VON ROHRFÖRMIGEN ELEMENTEN
ÉLECTROAIMANT POUR DÉPLACER DES ÉLÉMENTS TUBULAIRES

(30) Priority: 13.07.2009 IT MI20091241
(43) Date of publication of application: 23.05.2012
(73) Proprietor: SGM Gantry S.p.A., 25025 Manerbio (IT)
(72) Inventor: MOLTENI, Danilo, I-25025 Manerbio BS (IT)
(74) Representative: Concone, Emanuele
(86) International application number: PCT/EP2010/059412
(87) International publication number: WO 2011/006770

(56) References cited:
- GB-A- 107 856
- GB-A- 895 074
- GB-A- 1 396 914
- GB-A- 2 103 423
- US-A- 1 727 553
- US-A- 3 219 888
- US-A- 4 185 261
- US-A- 4 847 582

## Description

The present invention relates to electromagnets used in apparatuses for moving tubular members and bundles of tubes, and in particular to an electromagnet provided with a structure that substantially eliminates the laterally dispersed magnetic field.

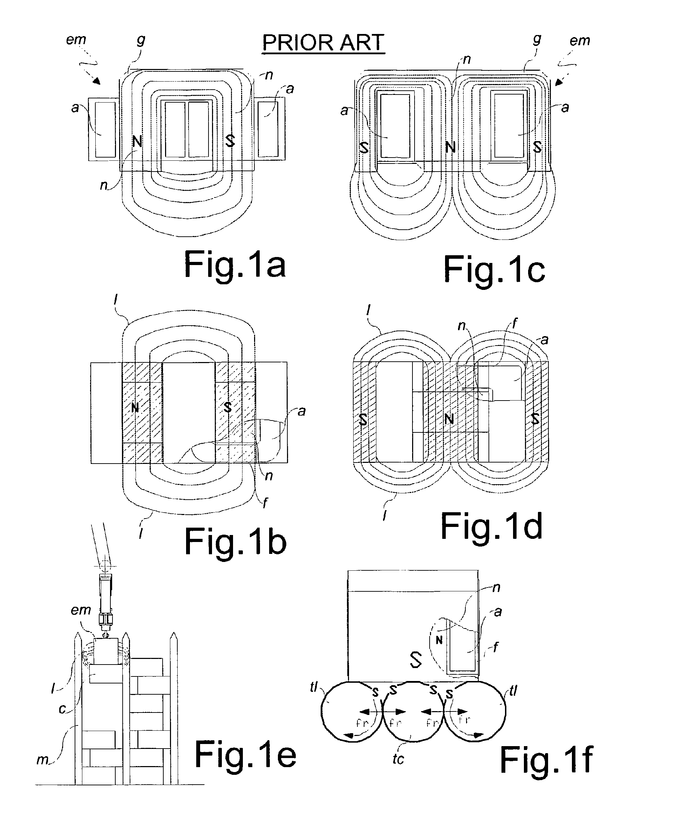

It is known that the electromagnets normally used for these apparatuses have a polar yoke shaped like an inverted U with 1 or 2 solenoids wound on the cores and North/South polarities (as illustrated in Fig.1a), or a polar yoke shaped like an E rotated 90° clockwise with a single solenoid wound on the central core and South/North/South polarities (as illustrated in Fig.1c). These electromagnets are used in pairs to move tubular members or bundles of tubes from 5 to 8 meters long, or in double pairs (i.e. 4) for lengths between 6 and 18 meters.

To move this type of load, the electromagnets are mounted on overhead travelling cranes manually guided by operators who meet significant difficulties in moving the load precisely, said difficulties being mainly due to the strong laterally dispersed magnetic field that such a type of electromagnets generates (as illustrated in Fig.1b and Fig.1d). In fact, the sides of conventional electromagnets, due to the shape of the polar yokes, are made from stainless or manganese steel or other material that is necessarily non-magnetic and therefore orthogonally permeable to the dispersed flux lines passing through it.

This laterally dispersed field makes it difficult to center the load in the proximity of ferromagnetic members such as other loads or stalls or metal side planks of transport means because, during the load transfer phase, the electromagnets are laterally deviated by the attractive effect towards said members caused by said dispersed field (see Fig.1e).

This occurs even if the electromagnets are fed through adjustment systems suitable to generate the magnetomotive force corresponding to the minimum operational limit. As a consequence, the moving is slow and difficult, the loads can not be correctly stacked and it is substantially impossible to use automatic moving systems since the lateral deviations always make necessary for an operator to provide a corrective intervention.

A further drawback of conventional electromagnets, which occurs when moving bundles of tubes kept together by containment strappings, are the repulsive forces that are generated between two adjacent tubes (as illustrated in Fig.1f) and discharged onto the strappings that tend to be deformed. In fact, since the electromagnets are arranged longitudinally on the bundle of tubes to be moved, the magnetically active regions (indicated by hatched areas in Figs.1b, 1d) are arranged transversally with respect to the tubes, whereby the underlying tube surfaces are all polarized with the same sign thus tending to repel each other due to the repulsive effect and, consequently, to rotate the two external tubes in opposite directions with possible damages to the tube surfaces.

These deformations of the strappings make it even more difficult to use automatic systems since the size of the bundle of tubes is changed, and the changes in multiple stacked bundles add up with the result that the theoretical coordinates calculated by the automatic system do not correspond to the actual position of the bundle to be moved.

Still another drawback of known electromagnets is the particularly high ratio between the overall exerted force and the limited active surface that contacts the load, the latter being not more than 50% of the plan surface area of the electromagnet (see hatched areas in Figs.1b, 1d). Therefore, the combination of the great weight of the electromagnets with the magnetic attractive force distributed over a limited surface results in a high specific pressure on the load that can damage the surface thereof, especially in the case of small-thickness members.

US 4.847.582 discloses a magnetic gripping apparatus comprising an external ferromagnetic yoke having a base plate and peripheral walls; four pole units each comprising a main pole piece having an outer face defining a gripping surface; three intermediate pole members, each arranged between two adjacent pole units, said intermediate pole members extending from the base plate to said gripping surface; permanent magnets arranged between the main pole pieces and the base plate and an electrical winding encircling the magnets between the main pole pieces and the base plate, said permanent magnets, in the activated condition of the apparatus, providing a pole distribution of the gripping surface in which two adjacent pole units or respectively one of the pole units and one of the adjacent intermediate pole members exhibit poles of opposite polarity on their outer faces.

In this way, an intermediate pole member, which is not usually fed by any magnetic source and merely constitutes a short-circuiting member between adjacent pole units when gripping large-sized workpieces, is automatically activated to conduct the magnetic flux generated by a given one of the pole units towards the gripping surface, so as to generate a pole, or "false pole", having a polarity opposite to that of said given pole unit, whenever the dimensions and/or disposition of the workpieces to be gripped are such as to prevent short-circuiting or contact with two adjacent pole units of opposing polarity. Otherwise, said intermediate pole member operates as a wholly neutral element which is magnetically inactive towards the workpiece gripping surface and contributes merely to support the workpieces to be gripped. This dual function of the intermediate pole member, which in fact causes a variation in the pole pitch, occurs wholly automatically in relation to the different lengths or dimensions of the metal workpieces to be gripped.

This document therefore relates to a permanent-magnet apparatus which is deactivated by complete demagnetization, said apparatus comprising a base plate and peripheral walls together defining a ferromagnetic yoke inside which are disposed four pole units with alternate North/South/North/South polarities. Each pole unit is substantially composed of a ferromagnetic element or main pole piece, one face of which ends in correspondence with the gripping surface, and of a core of magnetic material surrounded by an electrical coil, both of which are disposed coaxially to the magnetic core which is in contact between the upper ferromagnetic element and the base plate.

Such a known apparatus still suffers from the drawbacks mentioned above, since it does not effectively prevent the lateral dispersion of the magnetic field, causes the repulsive effect on the polarized tubes since the peripheral walls form a single yoke with the base plate and are not magnetically insulated from the magnetic cores, whereby the tubes are all polarized with the same sign, and has a small active surface corresponding to the outer surface of the main pole pieces or some of the pole pieces and an intermediate pole member when the load is shorter than the gripping apparatus.

Therefore the object of the present invention is to provide an electromagnet which overcomes the above-mentioned drawbacks. This object is achieved by means of an electromagnet formed by at least two E-shaped electromagnets aligned and provided with ferromagnetic side panels magnetically insulated from the cores and magnetically connected to the polar shoes of the poles, said panels being sufficiently thick as to short-circuit the lateral flux of the magnetic field thus preventing the dispersion thereof and conveying it towards said polar shoes of the poles. Other advantageous features are recited in the dependent claims.

The main advantage of an electromagnet according to the present invention is that, both in the presence and in the absence of a load, the laterally dispersed flux is practically nothing so as to allow a precise moving of the load to the desired position without undergoing deviations caused by other ferromagnetic members nearby. It is therefore possible to perfectly match the coordinates programmed in a overhead travelling crane or transport truck, which can be operated even in an automatic manner without the presence of an operator.

A second important advantage of the present electromagnet results from the fact that, when moving bundles of tubes, the flux lines at the cores that exit the cores and close into the side panels not only eliminate the lateral dispersions but also create an attractive force between adjacent tubes since the polarities generated on the tube surfaces are of opposite signs. As a consequence, these attractive forces tend to compensate for the repulsive forces generated between adjacent tubes at the head panels where the magnetically active regions have a same sign, as previously explained, thus substantially dispensing with the risk of deformation of the containment strappings and therefore allowing for the use of automatic systems also for moving bundles of tubes.

Still another significant advantage of the above-mentioned electromagnet resides in the large area of the active surface contacting the load with respect to the total plan surface area of the electromagnet. This results in a specific pressure, for the same force of magnetic attraction, which is much lower than that of conventional electromagnets and this decreases the possibility of damaging the load surface, in particular of small-thickness tubes.

Finally, a further advantage of such an electromagnet is given by the fact that, for the same width and load capacity, its greater longitudinal extension allows to reduce its height by half which increases the possibility of storing the load in warehouses and on transport means, in particular when they are provided with ribs.

These and other advantages and characteristics of the electromagnet according to the present invention will be clear to those skilled in the art from the following detailed description of an embodiment thereof, with reference to the annexed drawings wherein:
Figs.1a-1f illustrate prior art electromagnets and their drawbacks;
Fig.2 is a lateral view in longitudinal section along the midplane of an electromagnet according to the invention;
Fig.3 is a bottom plan view, with a broken-away portion, of the electromagnet of Fig.2;
Fig.4 is a lateral view diagrammatically showing a moving apparatus that uses said electromagnet; and
Fig.5 is a cross-sectional view along line V-V of Fig.3.

Referring first to the prior art illustrated in figures 1a to 1f, there is seen that a conventional electromagnet *em* may be formed by a polar yoke *g* having an inverted U shape with 2 solenoids *a* wound on cores *n* and North/South polarities (as illustrated in Fig.1 a), or an E shape rotated 90° clockwise with a single solenoid *a* wound on the central core *n* and South/North/South polarities (as illustrated in Fig.1c). In both cases, such an electromagnet *em* has a strong laterally dispersed field *l* (Figs.1b, 1d) since its side panels *f* are made from non-magnetic material, and this makes difficult to center the load *c* in the proximity of ferromagnetic members, such as stalls *m*, because of the lateral deviation caused by the attractive effect towards said members due to said dispersed field *l* (Fig.1e).

Moreover, as shown in Fig.1f, when moving bundles of tubes kept together by containment strappings, repulsive forces *fr* are generated between adjacent tubes since the tube surfaces, e.g. a central tube *tc* and two lateral tubes *tl*, are all polarized with the same sign thus tending to repel each other due to the repulsive effect and, consequently, to rotate the two external tubes *tl* in opposite directions.

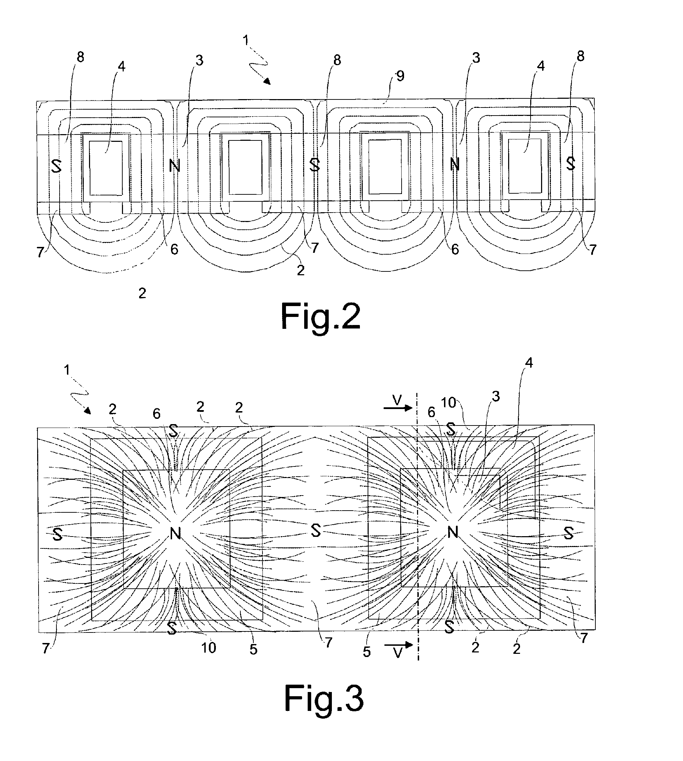

Figures 2 and 3 show a novel electromagnet 1 according to the present invention in which the flux lines 2 extend only downwards in the direction of the load to be moved, whereas the laterally dispersed magnetic field is substantially absent.

More specifically, there is seen that the polar yoke of said electromagnet 1 has a shape corresponding to two aligned E-shaped yokes. In fact, there are provided two North polarity cores 3 on which two solenoids 4 are wound, received in suitable recesses, buried in insulating resins and preferably manufactured from copper wire strips in order to achieve the maximum fill factor and to obtain a compact size of the solenoids 4 and consequently of the ferromagnetic circuit formed around them, thus reducing to a minimum the weight and size of electromagnet 1.

Solenoids 4 are protected on the bottom by annular baffles 5 made from non-magnetic material, such as wear-resistant manganese steel, and the flux lines 2 exit from the enlarged polar shoes 6 of the two cores 3, pass through the ferromagnetic material of the load to be moved and re-enter through the faces of three enlarged polar shoes 7 of the South polarity poles 8, finally closing in cover 9 that connects cores 3 to poles 8, all these circuital members being obviously made from ferromagnetic material.

A novel aspect of the present electromagnet is given by the presence of the side panels 10 made from ferromagnetic material extending along both sides and passing next to cores 3 so as to magnetically connect the three poles 8 while being magnetically insulated from cores 3 in order to prevent magnetic short-circuiting. The thickness of the ferromagnetic side panels 10 is sized such that they are suitable to short-circuit substantially the whole lateral flux, therefore preventing the dispersion thereof and conveying it completely towards the polar shoes 7 of poles 8 and into the material to be magnetized thus actively contributing to the lifting of the latter.

In fact, in the present electromagnet 1 the active surface contacting the load consists of the whole bottom surface with the exception of the two annular baffles 5 made from non-magnetic material. As a consequence, a same magnetic attraction force is distributed over a greater surface area, which combined with the reduction in weight of electromagnet 1 results in a low specific pressure on the load surface thus eliminating the risk of surface damage.

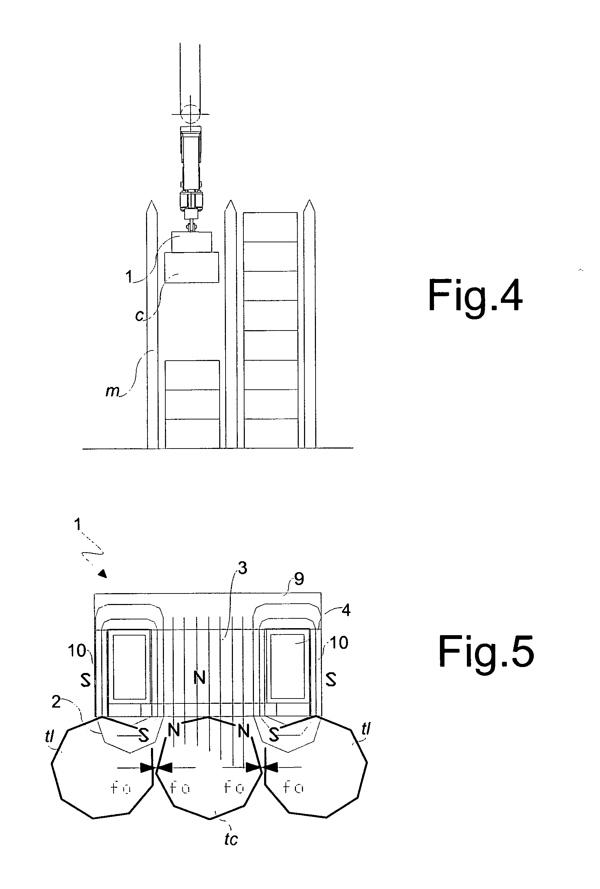

The pattern of the flux lines 2 illustrated in Figs.2, 3 shows that even in the open field, i.e. without the presence of a load, the laterally dispersed flux is practically nothing. This is an essential aspect for positioning load *c* in the desired spot with electromagnet 1 without undergoing deviations even in the presence of stalls *m* of ferromagnetic material, thus perfectly matching the coordinates programmed by an automatic system without requiring the presence of personnel (Fig.4).

Finally, as shown in the sectional view of Fig.5, the flux lines 2 exiting the two North polarity cores 3 and closing in the South polarity side panels 10 not only eliminate the lateral dispersions but also create attractive forces *fa* between the lateral tubes *tl* and the central tube *tc* because the polarities that are generated on adjacent active surfaces have opposite signs. This attractive effect increases the anchoring strength under the same conditions with respect to a conventional electromagnet and does not produce an additional load on the containment strappings.

This allows to prevent the deformations of the tube bundles strappings and the subsequent risks of strapping failure and of mismatching of the positioning coordinates. As a consequence, electromagnets 1 according to the present invention can be used to build an automatic warehouse for tubular members, including strapped tube bundles.

It is clear that the above-described and illustrated embodiment of the electromagnet according to the invention is just an example susceptible of various modifications. In particular, the double-E shape with two cores 3, two solenoids 4 and three poles 8 is preferred, yet the addition of further E-shaped modules could be provided to increase the lifting capacity. For example, a larger electromagnet 1 could include three cores 3, three solenoids 4 and four poles 8.

## Claims

1. An electromagnet (1) comprising at least two solenoids (4) each wound on a relevant core (3) of a polar yoke, side panels (10) and bottom baffles (5) for the protection of said solenoids (4), as well as first polar shoes (6) at said cores (3) and second polar shoes (7) at poles (8), **characterized in that** said polar yoke has a shape corresponding to at least two aligned E-shaped yokes with at least two cores (3) and three poles (8), and **in that** said side panels (10) are made from ferromagnetic material and magnetically connect the poles (8) while being magnetically insulated from the cores (3), the thickness of the side panels (10) being sized such that they are suitable to short-circuit the whole lateral flux of the magnetic field and to convey it towards said second polar shoes (7) of the poles (8).

2. The electromagnet (1) according to claim 1, **characterized in that** the solenoids (4) are received in suitable recesses, buried in insulating resins and manufactured from copper wire strips.

3. The electromagnet (1) according to claim 1 or 2, **characterized in that** the bottom baffles (5) are annular baffles extending between the side panels (10) and the cores (3).

4. An apparatus for moving tubular members of ferromagnetic material, **characterized in that** it includes one or more electromagnets (1) according to any one of the preceding claims.

## Patentansprüche

1. Elektromagnet (1), umfassend wenigstens zwei Magnetspulen (4), von denen jede auf einen passenden Kern (3) eines Poljochs gewickelt ist, Seitenplatten (10) und Bodenleitbleche (5), sowie erste Polschuhe (6) an den besagten Kernen (3) und zweite Polschuhe (7) an Polen (8), **dadurch gekennzeichnet, dass** das besagte Poljoch eine Gestalt aufweist entsprechend zwei fluchtend ausgerichteten, E-förmigen Jochen mit wenigstens zwei Kernen (3) und drei Polen (8), sowie dadurch, dass die besagten Seitenplatten (10) aus ferromagnetischem Material hergestellt sind und magnetisch an die Pole (8) angeschlossen sind, während sie von den Kernen (3) isoliert sind, wobei die Dicke der Seitenplatten (10) derart bemessen ist, dass sie geeignet sind, den gesamten lateralen Fluss des Magnetfeldes kurzzuschließen und ihn zu den zweiten Polschuhen (7) der Pole (8) hin zu leiten.

2. Elektromagnet (1) nach Anspruch 1, **dadurch gekennzeichnet, dass** die Magnetspulen (4) in geeigneten Ausnehmungen aufgenommen sind, in isolierenden Harzen eingebettet sind und aus Kupferdrahtstreifen hergestellt sind.

3. Elektromagnet (1) nach Anspruch 1 oder 2, **dadurch gekennzeichnet, dass** die Bodenleitbleche (5) ringförmige Leitbleche sind, die sich zwischen den Seitenplatten (10) und den Kernen (3) erstrecken.

4. Vorrichtung zum Bewegen von rohrförmigen Elementen aus ferromagnetischem Material, **dadurch gekennzeichnet, dass** sie einen oder mehrere Elektromagnete (1) nach einem der vorangehenden Ansprüchen umfasst.

## Revendications

1. Electroaimant (1) qui comprend au moins deux solénoïdes (4) chacun enroulés sur un noyau (3) d'une pièce polaire, des panneaux latéraux (10) et des déflecteurs inférieurs (5) destinés à protéger lesdits solénoïdes (4), et des premiers patins polaires (6) au niveau desdits noyaux (3) et des seconds patins polaires (7) au niveau de pôles (8), **caractérisé en ce que** ladite pièce polaire possède une forme qui correspond à au moins deux pièces alignées en forme de E ayant au moins deux noyaux (3) et trois pôles (8), et **en ce que** lesdits panneaux latéraux (10) sont fabriqués en matériau ferromagnétique et relient magnétiquement lesdits pôles (8) tout en étant magnétiquement isolés desdits noyaux (3), l'épaisseur desdits panneaux latéraux (10) étant telle qu'ils peuvent court-circuiter le flux latéral entier du champ magnétique et l'acheminer vers lesdits seconds patins polaires (7) desdits pôles (8).

2. Electroaimant (1) selon la revendication 1, **caractérisé en ce que** lesdits solénoïdes (4) sont reçus dans des renfoncements adaptés, gravés dans des résines isolantes et fabriqués à l'aide de bandes de fil de cuivre.

3. Electroaimant (1) selon la revendication 1 ou 2, **caractérisé en ce que** lesdits déflecteurs inférieurs (5) sont des déflecteurs annulaires qui s'étendent entre lesdits panneaux latéraux (10) et lesdits noyaux (3).

4. Appareil destiné à déplacer des éléments tubulaires en matériau ferromagnétique, **caractérisé en ce qu'**il comprend un ou plusieurs électroaimant(s) (1) selon l'une quelconque des revendications précédentes.
